# EUROPEAN PATENT APPLICATION

(11) **EP 4 455 007 A1**
(43) Date of publication of application: **30.10.2024**
(21) Application number: 24159794.7
(22) Date of filing: 26.02.2024
(51) Int. Cl.: B64D 11/04, B64D 11/00

(54) **CREW REST SYSTEM FOR AN INTERNAL CABIN OF AN AIRCRAFT**

(30) Priority: 25.04.2023 US 202363498056 P; 02.01.2024 US 202418401847
(71) Applicant: The Boeing Company, Arlington, VA 22202 (US)
(72) Inventor: SHARMA, Rohan Srinivas, Arlington, 22202 (US); ADDIS, Paul, Arlington, 22202 (US); DAVIS-DELANO, Sachel C., Arlington, 22202 (US); TABORA, Justin L., Arlington, 22202 (US)
(74) Representative: St Clair Jones, Gregory Arthur Langley

(57) **Abstract**

A crew rest system for an internal cabin of a vehicle, such as a commercial aircraft, includes a monument having a cart compartment configured to retain three or more galley carts. An access area having an entrance is on a side of the monument. The entrance leads into an internal passage having steps.

## Description

### CROSS-REFERENCE TO RELATED APPLICATIONS

This application is a non-provisional conversion of, and claims priority to, U.S. Provisional Patent Application No. 63/498,056, filed April 25, 2023, which is incorporated by reference in its entirety.

### FIELD OF THE DISCLOSURE

Examples of the present disclosure generally relate to a crew rest system for an internal cabin of a vehicle, such as a commercial aircraft.

### BACKGROUND OF THE DISCLOSURE

Vehicles such as commercial aircraft are used to transport passengers between various locations. A typical commercial aircraft includes an internal cabin having seats for passengers.

During certain types of flights, such as long haul flights, crew members of an aircraft may need to rest. As such, certain aircraft include crew rest areas. For example, a crew rest area in the form of an overhead flight crew rest (OFCR) area is disposed within an internal cabin of certain aircraft. One known OFCR area is 58 inches long, and another known OFCR area is 80 inches long. A known 58 inch OFCR area houses only two galley carts in a forward facing compartment. In contrast, a known 80 inch version houses four galley carts, although within a substantially larger footprint.

While the cart storage capability of the 80 inch version may be desirable, the large footprint of such version necessarily reduces space for seats within the internal cabin.

### SUMMARY OF THE DISCLOSURE

A need exists for an improved crew rest system for an internal cabin of an aircraft. Further, a need exists for a compact crew rest system for an internal cabin of an aircraft having increased cart storage capability.

With those needs in mind, certain examples of the present disclosure provide a crew rest system for an internal cabin of a vehicle. The crew rest system includes a monument having a cart compartment configured to retain three or more galley carts. An access area having an entrance is on a side of the monument. The entrance leads into an internal passage having steps.

In at least one example, the monument is a forward monument and the cart compartment is a front compartment that faces forward.

In at least one example, the cart compartment is configured to retain four full-sized galley carts.

In at least one example, the vehicle is an aircraft.

The access area can be behind a portion of the cart compartment. A storage area can be to a side of the access area.

In at least one example, the width of the monument is 53 inches, and a length of the monument is 61 inches.

In at least one example, the crew rest system also included an overhead bunk module including a bunk. The access area leads to the overhead bunk module. The overhead bunk module is configured to extend over portions of one or both of seats or overhead stowage bin assemblies within the internal cabin. The cart compartment can be in front of and below the overhead bunk module.

A door moveable between an open position and a closed position allows for the entrance to be selectively opened and closed.

In at least one example, the crew rest system also includes a forward rest area having a seat. The forward rest area is disposed over at least a portion of the cart compartment. The access area leads to the forward rest area.

In at least one example, the crew rest system includes an overhead bunk module including a bunk, and a forward rest area including a seat. The access area leads to the overhead bunk module and the forward rest area.

### BRIEF DESCRIPTION OF THE DRAWINGS

Figure 1 illustrates a perspective front view of an aircraft, according to an example of the present disclosure.
Figure 2 illustrates a perspective interior view of an internal cabin of an aircraft, according to an example of the present disclosure.
Figure 3 illustrates a schematic top plan view of a crew rest system for an internal cabin of a vehicle, according to an example of the present disclosure.
Figure 4 illustrates an isometric front, lateral view of the crew rest system, according to an example of the present disclosure.
Figure 5 illustrates a front view of the crew rest system of Figure 4.
Figure 6 illustrates a lateral view of the crew rest system of Figure 4.
Figure 7 illustrates a top view of the crew rest system of Figure 4.
Figure 8 illustrates a top plan view of a crew rest system within an internal cabin of an aircraft, according to an example of the present disclosure.
Figure 9 illustrates an isometric front, lateral view of the crew rest system, according to an example of the present disclosure.
Figure 10 illustrates an aft view an overhead bunk module from a forward rest area, according to an example of the present disclosure.

### DETAILED DESCRIPTION OF THE DISCLOSURE

The foregoing summary, as well as the following detailed description of certain embodiments will be better understood when read in conjunction with the appended drawings. As used herein, an element or step recited in the singular and preceded by the word "a" or "an" should be understood as not necessarily excluding the plural of the elements or steps. Further, references to "one embodiment" are not intended to be interpreted as excluding the existence of additional embodiments that also incorporate the recited features. Moreover, unless explicitly stated to the contrary, embodiments "comprising" or "having" an element or a plurality of elements having a particular condition can include additional elements not having that condition.

Examples of the present disclosure provide a crew rest system that provides a cart storage capability of a known 80 inch overhead flight crew rest (OFCR) area in a more compact footprint. In at least one example, the crew rest system is 3 inches longer than a known 56 inch OFCR area, with a forward monument being able to house four galley carts in a forward-facing compartment.

Examples of the present disclosure provide a vehicle, such as an aircraft, including an internal cabin. A crew rest system is within the internal cabin. The crew rest system includes a forward monument including a front cart compartment and an entrance. In at least one example, the front compartment faces forward (that is, toward a fore end of the aircraft in contrast to an aft end) and is configured to retain a plurality of galley carts, such as three or more galley carts. For example, the front compartment is configured to retain four galley carts. The entrance is on a side of the forward monument. The entrance leads into an internal passage having steps. In at least one example, the crew rest system also includes an overhead bunk module coupled to the forward monument. The overhead bunk module can extend over portions of seats and/or overhead stowage bin assemblies. In at least one example, the forward monument also includes a forward rest area having a seat.

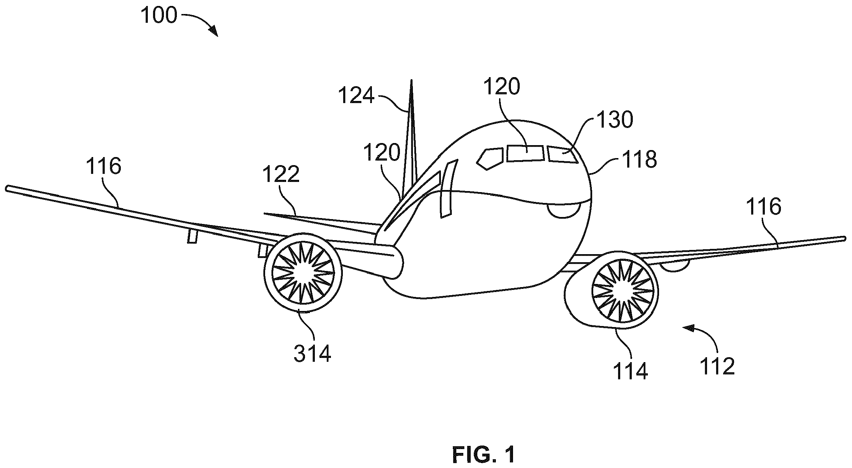

Figure 1 illustrates a perspective front view of an aircraft 100, according to an example of the present disclosure. The aircraft 100 includes a propulsion system 112 that includes engines 114, for example. Optionally, the propulsion system 112 may include more engines 114 than shown. The engines 114 are carried by wings 116 of the aircraft 100. In other examples, the engines 114 may be carried by a fuselage 118 and/or an empennage 120. The empennage 120 may also support horizontal stabilizers 122 and a vertical stabilizer 124.

The fuselage 118 of the aircraft 100 defines an internal cabin 130, which includes a flight deck or cockpit, one or more work sections (for example, galleys, personnel carry-on baggage areas, and the like), one or more passenger sections (for example, first class, business class, and coach sections), one or more lavatories, and/or the like.

Alternatively, instead of an aircraft, examples of the present disclosure may be used with various other vehicles, such as automobiles, buses, locomotives and train cars, watercraft, and the like.

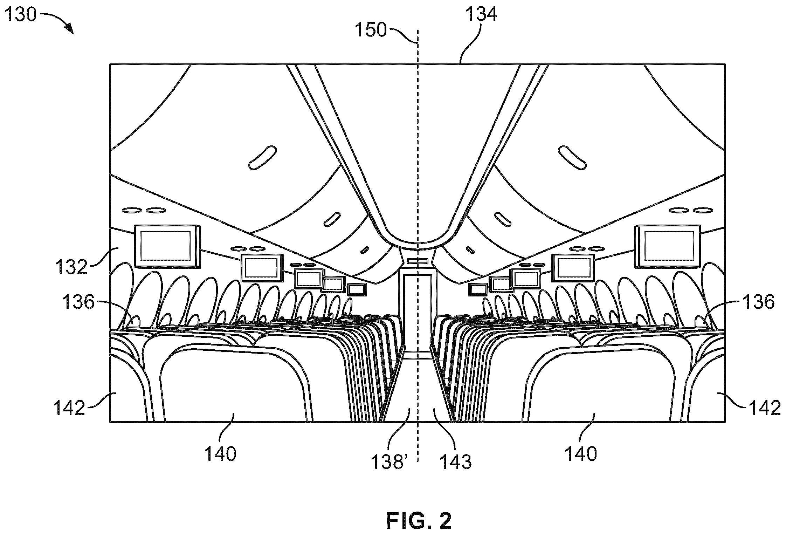

Figure 2 illustrates a perspective interior view of an internal cabin 130 of an aircraft, according to an example of the present disclosure. The internal cabin 130 includes outboard walls 132 and a ceiling 134. Windows 136 may be formed within the outboard walls 132. A floor 138 supports rows of seats 140. As shown in Figure 2, a row 142 may include three seats 140 on either side of an aisle 143. However, the row 142 may include more or less seats 140 than shown. Additionally, the internal cabin 130 may include more aisles than shown.

As used herein, the term "outboard" means a position that is further away from a central longitudinal plane 150 of the internal cabin 130 as compared to another component. The term "inboard" means a position that is closer to the central longitudinal plane 150 of the internal cabin 130 as compared to another component.

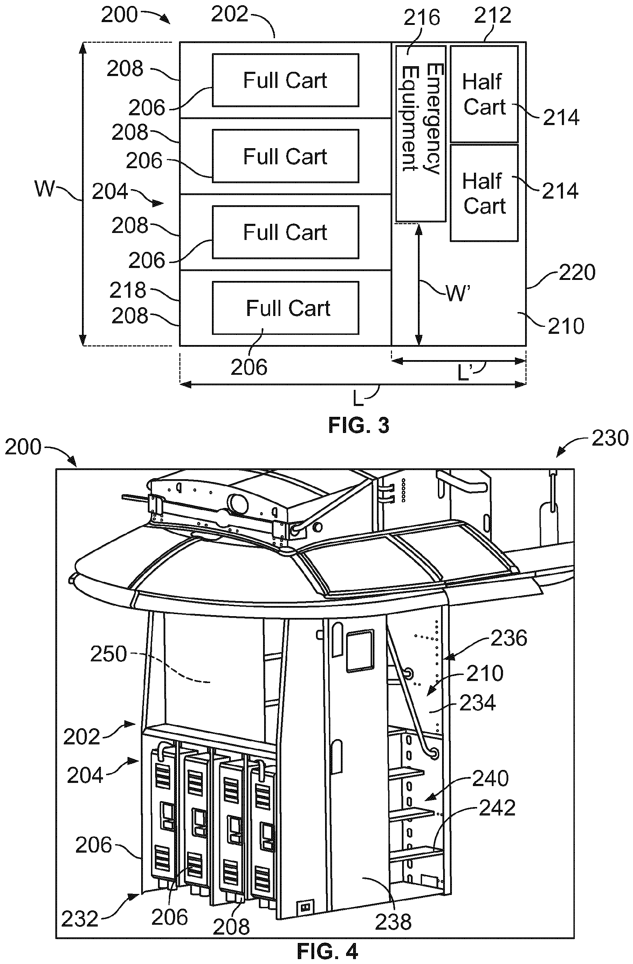

Figure 3 illustrates a schematic top plan view of a crew rest system 200 for an internal cabin of a vehicle (such as the aircraft 100 shown in Figure 1), according to an example of the present disclosure. The crew rest system 200 includes a forward monument 202 including a front cart compartment 204 that faces forward. That is, the front cart compartment 204 faces toward a fore end of the vehicle. For example, the front cart compartment 204 is oriented to face toward a flight deck or cockpit of an aircraft. In at least one example, the front cart compartment 204 has one or more cart passages that face forward. In at least one example, the front cart compartment 204 is configured to retain four galley carts 206, such as full-sized galley carts. For example, the front cart compartment 204 includes one or more bays 208 that are configured to retain the galley carts. Each bay 208 can include one or more walls that are configured that define an internal chamber into which a galley cart 206 is retained. Optionally, the front cart compartment 204 can include a single bay that retains the four galley carts 206. As another example, the front cart compartment 204 can include a single central dividing wall that divides that front cart compartment 204 into two bays, each of which is configured to retain two galley carts 206.

The crew rest system 200 also includes an access area 210 behind a portion of the front cart compartment 204. The access area 210 can be a vestibule having one or more steps that lead up to one or both of a forward rest area and/or an overhead bunk module.

The crew rest system 200 can also include a storage area 212 to a side of the access area 210, and behind a portion of the front cart compartment 204. The storage area 212 can be configured to store additional component, such as half-sized galley carts 214, emergency equipment 216, and/or the like.

As shown, the crew rest system 200 provides a monument (such as the forward monument) having a width W within an internal cabin. In at least one example, the width W is 53 inches. A length L of the monument spanning from a front end 218 of the front cart compartment 204 to a rear end 220 of the access area 210 can be 61 inches. It has been found that the forward monument having the width W of 53 inches, and a length L of 61 inches allows for a desirable compact structure that is able to retain four full-sized galley carts, and provide a desirable resting area for crew, while at the same time having a footprint that does not obtrude into space for seats within an internal cabin of an aircraft.

Optionally, the length L can be less than 61 inches (such as 55-60 inches) or greater than 61 inches (such as 62-63 inches). A length L' of the access area 210 can be 22.5 inches. Optionally, the length L' can be less than 22.5 inches (such as 20-22 inches), or greater than 22.5 inches (such as 23-24 inches). Optionally, the width W can be less than 53 inches (such as 50-52 inches) or greater than 53 inches (such as 54-55 inches). A width W' of the access area 210 can be 14.9 inches. Optionally, the width W' can be less than 14.9 inches (such as 13-14 inches), or greater than 14.9 inches (such as 15-16 inches).

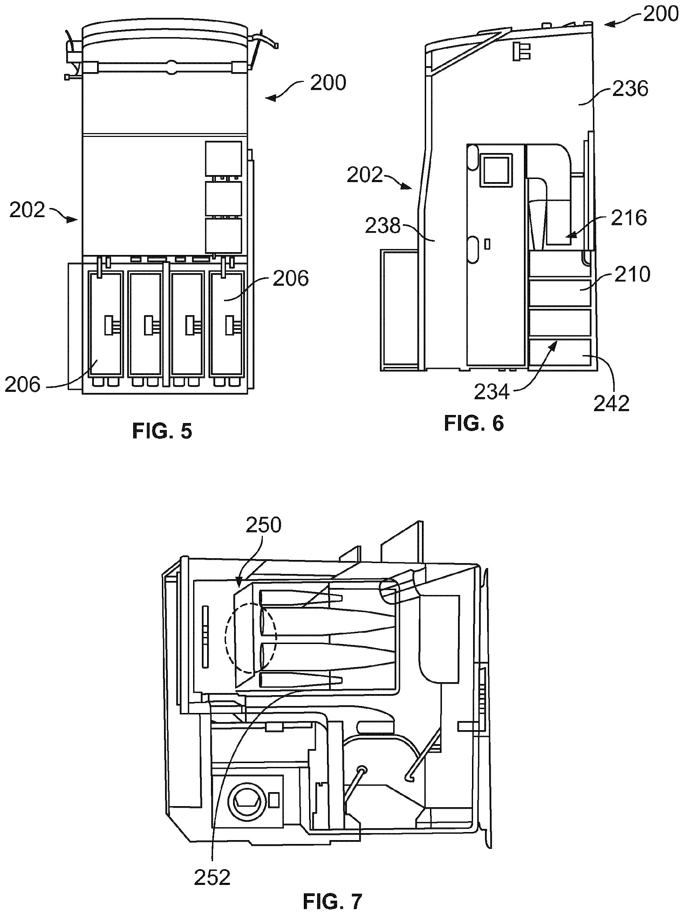

Figure 4 illustrates an isometric front, lateral view of the crew rest system 200, according to an example of the present disclosure. Figure 5 illustrates a front view of the crew rest system 200 of Figure 4. Figure 6 illustrates a lateral view of the crew rest system 200 of Figure 4. Figure 7 illustrates a top view of the crew rest system 200 of Figure 4. Referring to Figures 4-7, the crew rest system 200 includes the forward monument 202 connected to an overhead bunk module 230, which can extend over portions of seats and/or overhead stowage bin assemblies within the internal cabin. The overhead bunk module 230 can have at least a portion disposed over the front cart compartment 204. Optionally, the overhead bunk module 230 does not have a portion disposed over the front cart compartment 204. The access area 210 includes steps that allow an individual to climb up into the overhead bunk module 230.

As shown, the front cart compartment 204 has one or more cart passages 232 that face forward. As shown, the front cart compartment 204 is configured to retain four galley carts 206, such as full-sized galley carts.

In at least one example, the forward monument 202 is in front of, and below, the overhead bunk module 230. The forward monument 202 is closer to a fore end of the internal cabin than the overhead bunk module 230. In contrast, the overhead bunk module 230 is behind the forward monument 202. The overhead bunk module 230 is closer to the aft end than the forward monument 202. Alternatively, the forward monument 202 can be a rear monument that is behind the overhead bunk module 230.

In at least one example, the forward monument 202 includes the access area 210, which includes an entrance 234 located on a side 236 of the forward monument 202 (instead of the front). The forward monument 202 also includes a forward rest area 250. A door 238 is moveable between an open position and a closed position to selectively open and close the entrance 234. The entrance 234 leads into an internal passage 240 having steps 242 that allow an individual to step into the forward rest area 250, which can include a seat 252. The forward rest area 250 can be disposed above the front cart compartment 204, and in front of the overhead bunk module 230. The internal passage 240 and the forward rest area 250 also lead into a bunk chamber of the overhead bunk module 230.

In at least one example, the crew rest system 200 does not include the overhead bunk module 230. Instead, the entrance 234 may lead to the forward rest area 250 above at least a portion of the front cart compartment 204, but not to an overhead bunk module 230.

In at least one other example, the crew rest system 200 does not include the forward rest area 250. For example, the forward monument 202 may not include a forward rest area. Instead, the entrance 234 may lead to the overhead bunk module 230, which can include one or more portions over the front cart compartment 204.

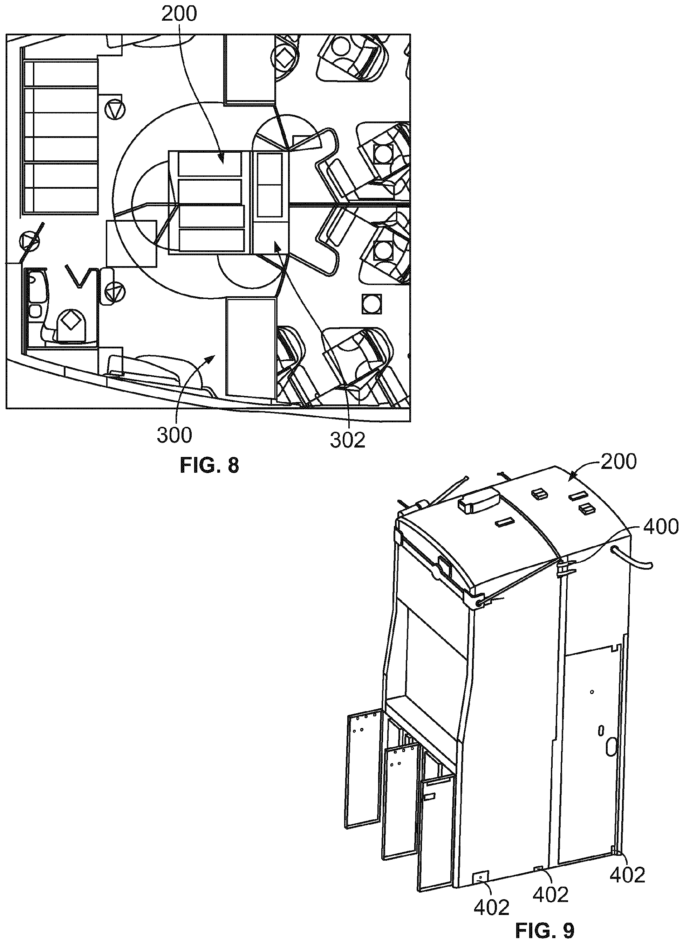

Figure 8 illustrates a top plan view of the crew rest system 200 within an internal cabin 300 of an aircraft 302, according to an example of the present disclosure. Referring to Figures 3-8. the crew rest system 200 provides an optimized OFCR configuration. In at least one example, by reconfiguring and spatially optimizing components, the crew rest system 200 is able to house an additional two galley carts (for a total of four full-sized galley carts), and provide additional storage capability and additional countertop space, while only being 3 inches longer than a baseline (58 inches long) OFCR design. The crew rest system 200 bolsters forward galley cart capacity, and allows for additional passenger seats within the internal cabin.

Figure 9 illustrates an isometric front, lateral view of the crew rest system 200, according to an example of the present disclosure. The crew rest system 200 can be configured to be retrofit into existing internal cabins, such as via upper attachment fittings 400 that are configured to connect to structure in the ceiling. Floor attachments 402 can be secured to lower portions of the crew rest system 200. The floor attachments 402 are configured to secure to reciprocal structures on or within a floor of an internal cabin.

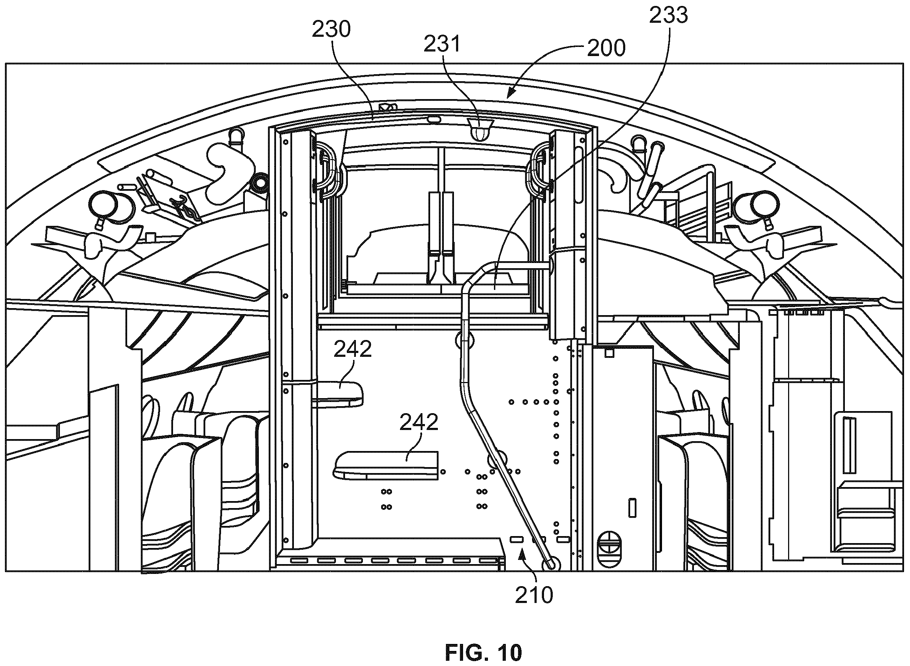

Figure 10 illustrates an aft view an overhead bunk module 230 from a forward rest area, according to an example of the present disclosure. The access area 210 can include steps 242 that allow an individual to climb up into the overhead bunk module 230. The overhead bunk module 230 defines a bunk chamber 231 having a bunk 233 (such as a padded support sheet, bed, cot, or the like).

Further, the disclosure comprises examples according to the following clauses:
Clause 1. A crew rest system for an internal cabin of a vehicle, the crew rest system comprising:
   a monument including:
   a cart compartment configured to retain three or more galley carts; and
   an access area having an entrance on a side of the monument, wherein the entrance leads into an internal passage having steps.
Clause 2. The crew rest system of Clause 1, wherein the monument is a forward monument and the cart compartment is a front compartment that faces forward.
Clause 3. The crew rest system of Clauses 1 or 2, wherein the cart compartment is configured to retain four full-sized galley carts.
Clause 4. The crew rest system of any of Clauses 1-3, wherein the vehicle is an aircraft.
Clause 5. The crew rest system of any of Clauses 1-4, wherein the access area is behind a portion of the cart compartment.
Clause 6. The crew rest system of any of Clauses 1-5, further comprising a storage area to a side of the access area.
Clause 7. The crew rest system of any of Clauses 1-6, wherein a width of the monument is 53 inches, and a length of the monument is 61 inches.
Clause 8. The crew rest system of any of Clauses 1-7, further comprising an overhead bunk module including a bunk, wherein the access area leads to the overhead bunk module.
Clause 9. The crew rest system of Clause 8, wherein the overhead bunk module is configured to extend over portions of one or both of seats or overhead stowage bin assemblies within the internal cabin.
Clause 10. The crew rest system of Clauses 8 or 9, wherein the cart compartment is in front of and below the overhead bunk module.
Clause 11. The crew rest system of any of Clauses 1-10, further comprising a door moveable between an open position and a closed position to selectively open and close the entrance.
Clause 12. The crew rest system of any of Clauses 1-11, further comprising a forward rest area including a seat, wherein the forward rest area is disposed over at least a portion of the cart compartment, and wherein the access area leads to the forward rest area.
Clause 13. The crew rest system of any of Clauses 1-7, further comprising:
   an overhead bunk module including a bunk; and
   a forward rest area including a seat,
   wherein the access area leads to the overhead bunk module and the forward rest area.
Clause 14. An aircraft comprising:
   an internal cabin; and
   a crew rest system within the internal cabin, wherein the crew rest system comprises:
      monument including:
      a cart compartment configured to retain four full-sized galley carts; and
      an access area having an entrance on a side of the monument, wherein the entrance leads into an internal passage having steps.
Clause 15. The aircraft of Clause 14, wherein the monument is a forward monument and the cart compartment is a front compartment that faces forward.
Clause 16. The aircraft of Clauses 14 or 15, wherein the access area is behind a portion of the cart compartment.
Clause 17. The aircraft of any of Clauses 14-16, wherein a width of the monument is 53 inches, and a length of the monument is 61 inches.
Clause 18. The aircraft of any of Clauses 14-17, further comprising an overhead bunk module including a bunk, wherein the access area leads to the overhead bunk module, wherein the overhead bunk module extends over portions of one or both of seats or overhead stowage bin assemblies within the internal cabin, and wherein the cart compartment is in front of and below the overhead bunk module.
Clause 19. The aircraft of any of Clauses 14-18, further comprising a forward rest area including a seat, wherein the forward rest area is disposed over at least a portion of the cart compartment, and wherein the access area leads to the forward rest area.
Clause 20. An aircraft comprising:
   an internal cabin; and
   a crew rest system within the internal cabin, wherein the crew rest system comprises:
      a forward monument having a width of the monument is 53 inches, and a length of the monument is 61 inches, the forward monument comprising:
      a front cart compartment that faces forward, wherein the front cart compartment is configured to retain four full-sized galley carts;
      an access area behind a portion of the front cart compartment, wherein the access areas has an entrance on a side of the monument, wherein the entrance leads into an internal passage having steps;
      a door moveable between an open position and a closed position to selectively open and close the entrance;
      a storage area to a side of the access area; and
      a forward rest area including a seat, wherein the forward rest area is disposed over at least a portion of the front cart compartment, and wherein the access area leads to the forward rest area; and
      an overhead bunk module including a bunk, wherein the access area leads to the overhead bunk module, wherein the overhead bunk module extends over portions of one or both of seats or overhead stowage bin assemblies within the internal cabin, and wherein the front cart compartment is in front of and below the overhead bunk module.

As described herein, examples of the present disclosure provide an improved crew rest system for an internal cabin of an aircraft. Further, examples of the present disclosure provide a compact crew rest system having increased cart storage capability.

While various spatial and directional terms, such as top, bottom, lower, mid, lateral, horizontal, vertical, front and the like can be used to describe embodiments of the present disclosure, it is understood that such terms are merely used with respect to the orientations shown in the drawings. The orientations can be inverted, rotated, or otherwise changed, such that an upper portion is a lower portion, and vice versa, horizontal becomes vertical, and the like.

As used herein, a structure, limitation, or element that is "configured to" perform a task or operation is particularly structurally formed, constructed, or adapted in a manner corresponding to the task or operation. For purposes of clarity and the avoidance of doubt, an object that is merely capable of being modified to perform the task or operation is not "configured to" perform the task or operation as used herein.

It is to be understood that the above description is intended to be illustrative, and not restrictive. For example, the above-described embodiments (and/or aspects thereof) can be used in combination with each other. In addition, many modifications can be made to adapt a particular situation or material to the teachings of the various embodiments of the disclosure without departing from their scope. While the dimensions and types of materials described herein are intended to define the parameters of the various embodiments of the disclosure, the embodiments are by no means limiting and are exemplary embodiments. Many other embodiments will be apparent to those of skill in the art upon reviewing the above description. The scope of the various embodiments of the disclosure should, therefore, be determined with reference to the appended claims, along with the full scope of equivalents to which such claims are entitled. In the appended claims and the detailed description herein, the terms "including" and "in which" are used as the plain-English equivalents of the respective terms "comprising" and "wherein." Moreover, the terms "first," "second," and "third," etc. are used merely as labels, and are not intended to impose numerical requirements on their objects. Further, the limitations of the following claims are not written in means-plus-function format and are not intended to be interpreted based on 35 U.S.C. § 112(f), unless and until such claim limitations expressly use the phrase "means for" followed by a statement of function void of further structure.

This written description uses examples to disclose the various embodiments of the disclosure, including the best mode, and also to enable any person skilled in the art to practice the various embodiments of the disclosure, including making and using any devices or systems and performing any incorporated methods. The patentable scope of the various embodiments of the disclosure is defined by the claims, and can include other examples that occur to those skilled in the art. Such other examples are intended to be within the scope of the claims if the examples have structural elements that do not differ from the literal language of the claims, or if the examples include equivalent structural elements with insubstantial differences from the literal language of the claims.

## Claims

1. A crew rest system (200) for an internal cabin (130) of a vehicle, the crew rest system (200) comprising:
a monument including:
a cart compartment (204) configured to retain three or more galley carts (206); and
an access area (210) having an entrance (234) on a side of the monument, wherein the entrance (234) leads into an internal passage (240) having steps (242).

2. The crew rest system (200) of claim 1, wherein the monument is a forward monument (202) and the cart compartment (204) is a front compartment that faces forward.

3. The crew rest system (200) of either of claims 1 or 2, wherein the cart compartment (204) is configured to retain four full-sized galley carts (206).

4. The crew rest system (200) of any of claims 1 to 3, wherein the vehicle is an aircraft (100).

5. The crew rest system (200) of any of claims 1 to 4, wherein the access area (210) is behind a portion of the cart compartment (204).

6. The crew rest system (200) of any of claims 1 to 5, further comprising a storage area (212) to a side of the access area (210).

7. The crew rest system (200) of any of claims 1 to 6, wherein a width of the monument is 53 inches, and a length of the monument is 61 inches.

8. The crew rest system (200) of any of claims 1 to 7, further comprising an overhead bunk module (230) including a bunk, wherein the access area (210) leads to the overhead bunk module (230).

9. The crew rest system (200) of claim 8, wherein the overhead bunk module (230) is configured to extend over portions of one or both of seats (140) or overhead stowage bin assemblies within the internal cabin (130).

10. The crew rest system (200) of either of claims 8 or 9, wherein the cart compartment (204) is in front of and below the overhead bunk module (230).

11. The crew rest system (200) of any of claims 1 to 10, further comprising a door moveable between an open position and a closed position to selectively open and close the entrance (234).

12. The crew rest system (200) of any of claims 1 to 11, further comprising a forward rest area (250) including a seat, wherein the forward rest area (250) is disposed over at least a portion of the cart compartment (204), and wherein the access area (210) leads to the forward rest area (250).

13. The crew rest system (200) of any of claims 1 to 12, further comprising:
an overhead bunk module (230) including a bunk; and
a forward rest area (250) including a seat,
wherein the access area (210) leads to the overhead bunk module (230) and the forward rest area (250).

14. An aircraft (100) comprising:
an internal cabin (130); and
the crew rest system (200) of any preceding claim.

15. The aircraft (100) of claim 14, further comprising an overhead bunk module (230) including a bunk, wherein the access area (210) leads to the overhead bunk module (230), wherein the overhead bunk module (230) extends over portions of one or both of seats (140) or overhead stowage bin assemblies within the internal cabin (130).
